Europäisches Patentamt

European Patent Office

Office européen des brevets

(11) Veröffentlichungsnummer : **0 148 285**
**B1**

(12) EUROPÄISCHE PATENTSCHRIFT

(45) Veröffentlichungstag der Patentschrift :
04.05.88

(51) Int. Cl.⁴ : **G 01 B 11/30**, G 01 B  7/34,
G 01 B  5/28

(21) Anmeldenummer : 83113118.0

(22) Anmeldetag : 27.12.83

(54) Verfahren und Einrichtung zur Messung von Oberflächenprofilen.

(43) Veröffentlichungstag der Anmeldung :
17.07.85 Patentblatt 85/29

(45) Bekanntmachung des Hinweises auf die Patenterteilung : 04.05.88 Patentblatt 88/18

(84) Benannte Vertragsstaaten :
DE FR GB

(56) Entgegenhaltungen :
EP-A- 0 011 708
EP-A- 0 021 148
CH-A-   630 016
DE-B- 1 068 025
FR-A- 2 280 054
US-A- 4 353 650

(73) Patentinhaber : IBM DEUTSCHLAND GMBH
Pascalstrasse 100
D-7000 Stuttgart 80 (DE)
DE
International Business Machines Corporation
Old Orchard Road
Armonk, N.Y. 10504 (US)
FR GB

(72) Erfinder : Drollinger, Bernhard, Dipl.-Ing.
Giemsweg 2
D-7252 Weil der Stadt 2 (DE)
Erfinder : Makosch, Günter, Dipl.-Phys.
Stuttgarter Strasse 40
D-7032 Sindelfingen-Maichingen (DE)

(74) Vertreter : Teufel, Fritz, Dipl.-Phys.
IBM Deutschland GmbH. Europäische Patentdienste
Postfach 265
D-8000 München 22 (DE)

## Beschreibung

Die Erfindung betrifft ein Verfahren zur Messung von Oberflächenprofilen nach dem Oberbegriff des Anspruchs 1 und Einrichtungen zur Durchführung des Verfahrens.

Bei vielen modernen Herstellverfahren und Qualitätsprüfungen müssen Oberflächenprofile mit extremer Genauigkeit gemessen werden ; Beispiele hierfür sind in der optischen Industrie, in der Halbleitertechnik und in der Feinmechanik zu finden. Zur Überprüfung der Ebenheit einer Fläche oder einer Geradführung werden dabei nicht selten Meßauflösungen im Submikron- und Nanometerbereich verlangt.

Zu derartigen hochgenauen Messungen werden heute mechanische Tastschnittverfahren oder optische Interferenzmethoden eingesetzt. Beim Tastschnittverfahren wird die zu prüfende Oberfläche mit einer feinen Meßspitze abgefahren, deren Auslenkung senkrecht zur gemessenen Oberfläche von einem Meßwandler in einen elektrischen Meßwert umgesetzt wird. Die erreichbare Höhenauflösung dieser Methode ist besser als 10 Nanometer, doch treten beim Kontakt zwischen Meßspitze und Oberfläche extrem hohe Drücke auf, die leicht zu Kratzern oder anderen Beschädigungen führen.

Eine Anordnung mit zwei mechanischen Sensoren, die in Abtastrichtung hintereinander angeordnet sind, ist in der DE-A-1068025 dargestellt ; entsprechend dem Zweck dieser Anordnung, Rauhigkeitsmessungen an Oberflächen durchzuführen, weisen die Sensoren unterschiedlich geformte Tast-Spitzen auf, so daß keine lokalen Höhendifferenzen gemessen werden können.

Eine für die Ebenheitsmessung großflächiger Gegenstände geeignete Einrichtung mit drei Abstandssensoren beschreibt FR-A-228054 ; diese Einrichtung liefert im wesentlichen Aussagen über Höhenschwankungen kurzer Perioden, nicht jedoch ein Höhenprofil im eigentlichen Sinn.

Optische Interferenzverfahren weisen diesen Nachteil nicht auf, da dort eine berührungslose Antastung der Oberfläche erfolgt. Ein weiterer Vorteil dieser Methode ist die Möglichkeit, Profile nicht nur längs ausgewählter Abtastlinien zu erzeugen, sondern großflächige Interferenzbilder, mit denen das Profil der gesamten Oberfläche aufgenommen werden kann. Die Auswertung der dabei entstehenden optischen Interferenzbilder ist jedoch sehr komplex und daher fehleranfällig ; eine automatische Auswertung erfordert einen leistungsfähigen Rechner.

Reichen Profilbestimmungen längs ausgewählter Abtastspuren aus, so können auch einfachere optische Interferometeranordnungen verwendet werden, bei denen ein von der zu untersuchenden Oberfläche reflektierter (punktförmiger) Meßstrahl mit einem Referenzstrahl überlagert wird, der beispielsweise an einem ortsfesten Spiegel reflektiert wurde. Bei Anwendung moderner Auswertetechniken für die Interferogramme, z. B. mit der sog. Heterodyne-Interferometrie, kann die Meßauflösung bis auf einige Nanometer gesteigert werden.

Ein Beispiel für eine interferometrische Profilbestimmung längs einer kreisförmigen Abtastspur ist in US-A-4353650 beschrieben ; als Referenz dient dort ein auf den Drehpunkt der rotierenden Probenoberfläche gerichtetes Lichtstrahlenbündel.

Auch aus der EP-A-11708 ist eine interferometrische Zweistrahl-Anordnung bekannt, die Höhendifferenzen zwischen zwei ausgewählten Punkten bestimmt. Wie Höhenprofile mit großer Genauigkeit damit bestimmt werden können, ist dort nicht ausgeführt.

Bei allen bekannten Verfahren zur Profilmessung, die eine Relativbewegung zwischen der Meßsonde (mechanischer Spitze oder optischem Abtaststrahl) erfordern, kann die eigentlich erreichbare hohe Meßauflösung nicht ausgenutzt werden, da sie durch sehr viel größere Führungsfehler bei der Relativbewegung überdeckt wird. So beträgt beispielsweise der Höhenschlag moderner mechanischer XY-Verschiebungstische $+ 1 \mu m$ bei einem typischen Verschiebebereich von 10 cm. Die Führungsfehler von den (relativ teuren) Luftlager-geführten Tischen sind zwar kleiner, ermöglichen aber immer noch keine Messungen im Nanometerbereich.

Die vorliegende Erfindung stellt sich daher die Aufgabe, ein Verfahren der eingangs genannten Art anzugeben, das Profilmessungen erlaubt, die möglichst wenig durch Führungsfehler bei der Relativverschiebung zwischen Meßsonde und Oberfläche beeinflußt werden. Zur Durchführung des Verfahrens sollen Einrichtungen angegeben werden, die einen geringen Aufwand erfordern und schnelle Messungen ermöglichen.

Bei dem hier vorgeschlagenen Verfahren wird die zu untersuchende Oberfläche gleichzeitig mit zwei Meßsonden beaufschlagt, die in Abtastrichtung hintereinander angeordnet sind und einen gewissen gegenseitigen Abstand aufweisen. Die zwischen den beiden Abtastpunkten gemessene lokale Höhendifferenz wird dann längs der Abtastspur integriert, um das dieser Spur entsprechende Profil zu erhalten. Zur Messung der lokalen Höhendifferenz wird vorzugsweise ein optisches Zweistrahl-Interferometer verwendet, bei dem die Phasendifferenz zwischen beiden Strahlen durch eine elektrooptische Kompensationsmethode mit großer Genauigkeit bestimmt wird. Das vorgeschlagene Verfahren eignet sich jedoch auch für andere Abtasteinrichtungen, beispielsweise das Tastschnittverfahren, wenn dort anstelle einer einzigen Meßspitze zwei derartige Spitzen hintereinander angeordnet werden ; auch induktive oder kapazitive Sonden kommen in Frage.

Mit dem hier vorgeschlagenen Verfahren können Oberflächenprofile mit einer Meßgenauigkeit von einigen Nanometern aufgenommen werden, obwohl die zur Relativverschiebung zwischen Meßsonden und Oberfläche verwendeten Vorrichtungen, z. B. Kreuztische, Führungsfehler aufweisen, die um Größenordnungen höher sind (z. B. Höhenschlag, Winkelversetzung). Bei Verwendung einer optischen Interferenzeinrichtung sind hier keine Präzisions-Reflexionsspiegel erforderlich. Die Profilmessung kann schnell durchgeführt werden, liefert eindeutige, vom Operator unabhängige Ergebnisse und läßt sich in einer Fertigungslinie auch automatisch abwickeln. Umwelteinflüsse wie Temperatur und Feuchtigkeit spielen trotz der hohen Meßauflösung kein Rolle. Soll die Verwindung einer Fläche bestimmt werden, liegt die Verbindungslinie der beiden Sensoren senkrecht zur Abtastspur.

Ausführungsbeispiele der Erfindung werden nun anhand von Zeichnungen näher erläutert. Es zeigen :

Fig. 1 in schematischer Weise die Antastung einer zu untersuchenden Oberfläche mit zwei hintereinander angeordneten Meßsonden (Doppelsensor) ;

Fig. 2 den schematischen Aufbau eines Interferometers, das vorzugsweise in der Meßanordnung nach Fig. 1 verwendet wird ;

Fig. 3A das mit einer Meßanordnung nach Fig. 1 abgetastete Höhenprofil, wenn keine Führungsfehler vorhanden sind ;

Fig. 3B das Oberflächenprofil für die Meßkurve nach Fig. 3A ;

Fig. 4A die in der Meßapparatur nach Fig. 1 auftretenden Profilhöhenschwankungen, wenn Führungsfehler vorliegen ;

Fig. 4B den Einfluß von Führungsfehlern auf die Meßkurven, die mit der Meßapparatur nach Fig. 1 aufgenommen werden ;

Fig. 5 die schematische Darstellung einer Profilmessung mit Doppelsensoren bei einer gekrümmten Oberfläche.

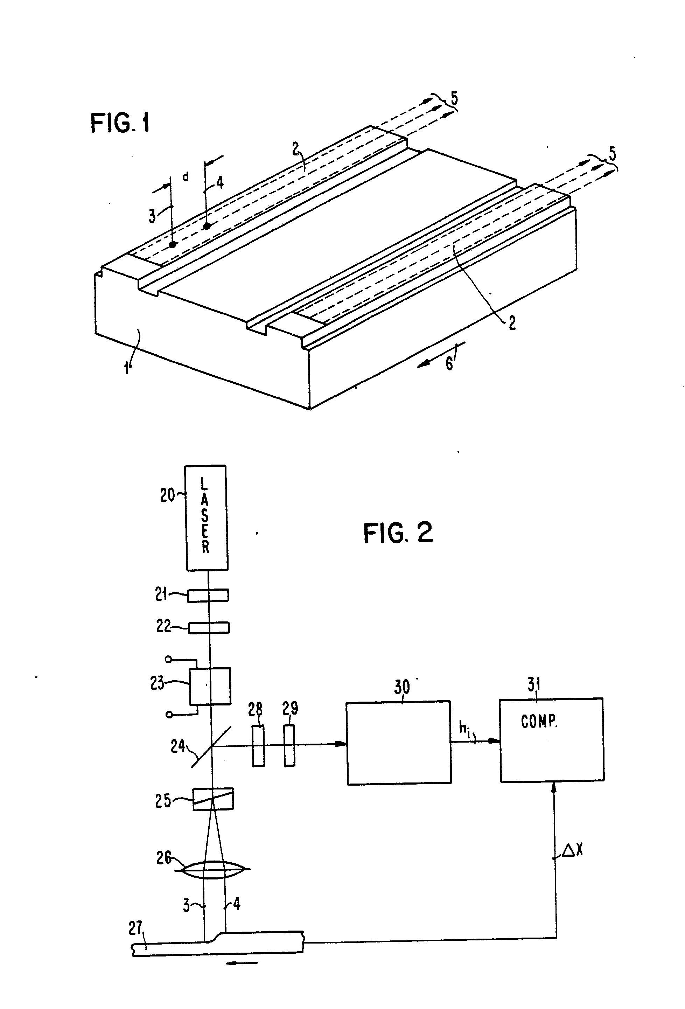

Fig. 1 zeigt die schematische Anordnung zur Durchführung des hier vorgeschlagenen Doppelsensorverfahrens. Der Probenkörper 1 hat an seiner Oberfläche zwei Geradführungen 2, die längs einer oder mehreren der gestrichelt gezeichneten Abtastspuren 5 auf Geradheit geprüft werden sollen. Dazu werden die Führungen 2 mit zwei Meßsonden 3, 4 (Doppelsensor) beaufschlagt, die einen gegenseitigen Abstand d aufweisen und beide die Führung 2 auf den gewünschten Abtastspuren 5 berühren. Zur Durchführung der Messung wird der Probenkörper 1 relativ zu den Sensoren 3, 4 in Richtung der Abtastspuren 5 bewegt, beispielsweise durch Verschiebung des Körpers 1 in Richtung des Pfeiles 6 bei festgehaltenen Sensoren.

Während der Relativbewegung wird die Höhendifferenz zwischen den Auftreffpunkten der Sensoren 3 und 4 gemessen. Dies kann beispielsweise dadurch erfolgen, daß als Sensoren 3, 4 jeweils mechanische Tastspitzen verwendet werden ; in diesem Fall ist die lokale Höhendifferenz gleich der Differenz der beiden abgelesenen mechanischen Ausschläge.

In einer bevorzugten Ausführungsform bestehen die beiden Sensoren 3 und 4 aus zwei kohärenten Lichtbündeln, die auf die Oberfläche 2 fokussiert werden und nach Reflexion einen Phasenunterschied aufweisen, der durch elektrooptische Kompensation bestimmt wird. Ein derartiges phasenempfindliches Zweistrahl-Interferometer (Differential-Interferometer) ist in der Europäischen Patentanmeldung EP 11 708 und dem Artikel « Surface profiling by electro-optical phase measurements » von Makosch und Solf in SPIE, Band 316 (1981) beschrieben ; es umfaßt nach Fig. 2 einen Laser 20, dessen Ausgangsstrahlenbündel eine λ/2-Platte 21, einen Polarisator 22 und einen elektrooptischen Modulator 23 durchläuft, in dem die beiden senkrecht zueinander polarisierten Teilstrahlenbündel eine periodische relative Phasendifferenz aufgeprägt erhalten. Die beiden Bündel unterschiedlicher Polarisationsrichtung werden anschließend im doppelbrechenden Element 25 aufgespalten und durch ein optisches System 26 auf die zu untersuchende Oberfläche des Probenkörpers 27 gerichtet, der in Fig. 2 mit einer Stufe dargestellt ist. Die beiden reflektierten Strahlenbündel 3 und 4 werden im doppelbrechenden Element 25 wiedervereinigt und am Umlenkspiegel 24 zu einem Polarisator 28 und einem Photodetektor 29 abgelenkt. Der Photodetektor liefert ein zeitabhängiges Signal, aus dem in der Auswerteeinheit 30 die momentane Phasendifferenz der beiden Strahlenbündel 3 und 4, und damit deren Höhendifferenz $h_i$ mit großer Genauigkeit (z. B. durch Bestimmung der Nulldurchgänge) ermittelt werden kann. Die Höhenauflösung dieser Anordnung beträgt ungefähr 1 Nanometer. Durch die berührungslose Antastung des Meßobjekts und die Möglichkeit, den Abstand zwischen den beiden Strahlenbündeln 3 und 4 durch entsprechende Wahl des doppelbrechenden Elements 25 zu verändern, eignet sich dieses Differential-Interferometer besonders für das hier beschriebene Verfahren. Die Auswerteeinheit 30 liefert die jeweils ermittelte lokale Höhendifferenz $h_i$ an einen Rechner, der außerdem ein Positionssignal für die momentane Lage der Oberfläche 27 erhält.

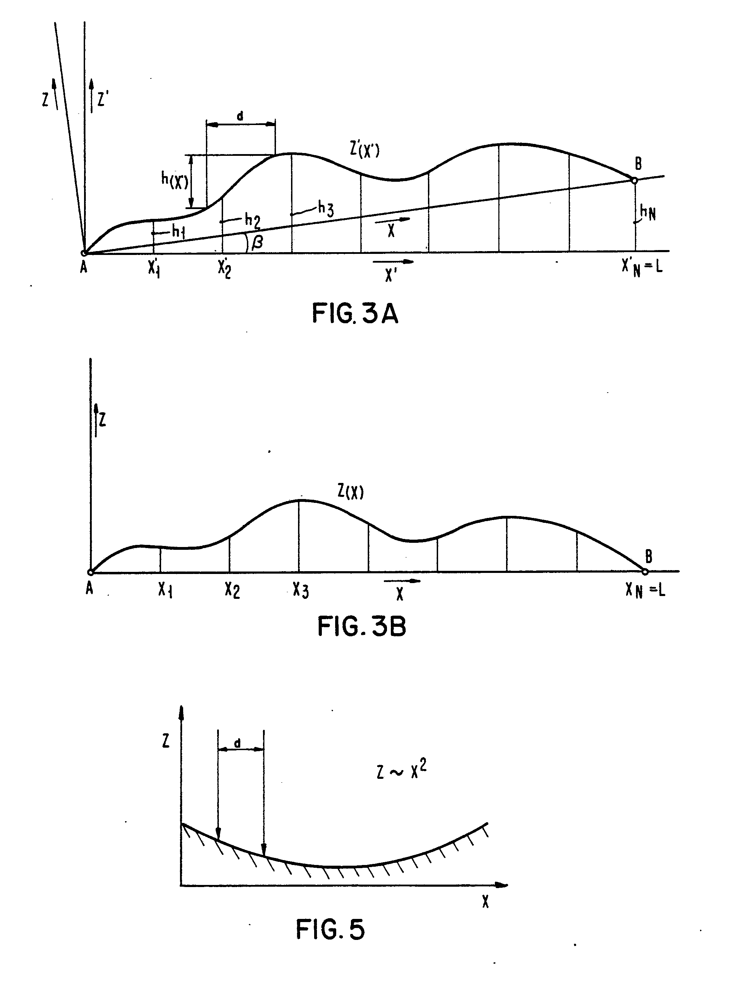

Das Meßverfahren selbst wird nun anhand von Fig. 3 erläutert. Dabei wird angenommen, daß der Probenkörper 1 auf einem X-Y-Tisch befestigt ist und kontinuierlich längs einer Geraden unter dem stationären Doppelsensor vorbeibewegt wird. Das zu vermessende Profil wird entsprechend Fig. 3A in einem z'x'-Koordinatensystem beschrieben, das mit dem Tisch mitbewegt wird. Der Koordinatenursprung fällt dabei mit dem linken Randpunkt A des zu vermessenden Profils zusammen. Die z'-Achse verläuft parallel zu den Achsen des Doppelsensors (z. B. den Mittelpunktsstrahlen der Lichtbündel 3 und 4 in Fig. 1). Im allgemeinen Fall wird das Objekt auf dem X-Y-Tisch geneigt sein, so daß der rechte Randpunkt B des Profils nicht auf der x'-Achse, sondern darüber oder darunter liegen wird.

Bei der geradlinigen Verschiebung des Prüfkörpers 1 in Richtung der negativen x'-Achse werden alle

Höhendifferenzen

$$h(x') = z'(x') - z(x' - d) \tag{1}$$

von $x' = d$ (dem Abstand der Sensoren) bis $x' = L$ (der Profillänge) gemessen. $z'(x')$ ist das aufgenommene Profil in der $x'z'$-Ebene. Unter diesen Meßwerten befinden sich auch die Werte $h'(x_k)$ die zu den Abszissenwerten

$$x'_k = kd \qquad (k = 1, 2, 3 \ldots N) \tag{2}$$

gehören.

Die Werte $h'(x'_k)$ sind die Höhendifferenzen, die gemessenen werden, wenn der rechte Sensor den Profilpunkt $z'(x'_k)$ antastet, während der linke den um die Strecke d zurückliegenden Profilpunkt $z'(x'_k\text{-}d)$ antastet. Die Strecke O-L auf der x'-Achse wird also zur Bestimmung dieser Höhendifferenzen in gleich lange Intervalle des Abstands d unterteilt und die diesen Punkten zugeordneten Meßwerte ermittelt. Bei hinreichend kleinem Abstand d der Doppelsensoren kommt der letzte Punkt $x'_N$ dieser Einteilung dem Endpunkt $x' = L$ des zu vermessenden Profils beliebig nahe. Für diesen Punkt gilt daher mit guter Näherung

$$x'_N = Nd \cong L \tag{3}$$

Die so ausgewählten Meßwerte lauten also :

$$
\begin{aligned}
h_1 &= z'(x'_1) - z'(0) \qquad (z'(0) = 0, \text{Def.}\,!) \\
h_2 &= z'(x'_2) - z'(x'_1) \\
&\vdots \\
h_k &= z'(x'_k) - z'(x_{k-1}) \\
&\vdots \\
h_N &= z'(x'_N) - z'(x'_{N-1})
\end{aligned}
\tag{4}
$$

Daraus lassen sich die Funktionswerte $z'(x'_k)$ durch Addition errechnen :

$$z'(x'_k) = \sum_{i=1}^{k} h_i \qquad (i = 1, 2, 3 \ldots) \tag{5}$$

Die Funktion $z'(x')$ ist an den Punkten $x'_k$ also eindeutig bestimmt. Infolge der angenommen gleichmäßigen Neigung stellt die Kurve (5) noch nicht das gewünschte Profil selbst dar. Zu diesem gelangt man erst nach einer Drehung des Koordinatensystems um den Winkel β (dem Steigungswinkel der Geraden vom Punkt A zum Punkt B). Dazu wird das alte Koordinatensystem x', z' in das neue Koordinatensystem x, z in Fig. 3 überführt, wobei gilt :

$$
\begin{aligned}
z &= -x' \sin\beta + z' \cos\beta \\
x &= x' \cos\beta + z' \sin\beta \\
\tan\beta &= \frac{z'(x'_N)}{x'_N}
\end{aligned}
\tag{6}
$$

In Fig. 3B ist die Funktion z(x) als Ergebnis dieser Koordinatentransformation dargestellt, das dem aus den gemessenen Höhendifferenzen h(x') ermittelten gesuchten Profil entspricht. Da Meßwerte nur an den Punkten $x_i$ ausgewertet wurden, müssen die Zwischenwerte durch Interpolation bestimmt werden, um die Profilhöhe an jedem Punkt der x-Achse zu erhalten.

Bei der Messung der einzelnen Höhendifferenzen muß außerdem die jeweilige x-Koordinate, d. h. die Verschiebung des Doppelsensors bezüglich der zu untersuchenden Oberfläche bekannt sein. Dieser Wert kann entweder durch Messung der Verschiebung des Probenkörpers (beispielsweise durch ein mit dem X-Y-Tisch verbundenes Interferometer) bestimmt werden oder bei geradlinig gleichförmiger Bewegung über den Zeitpunkt der jeweiligen Messung.

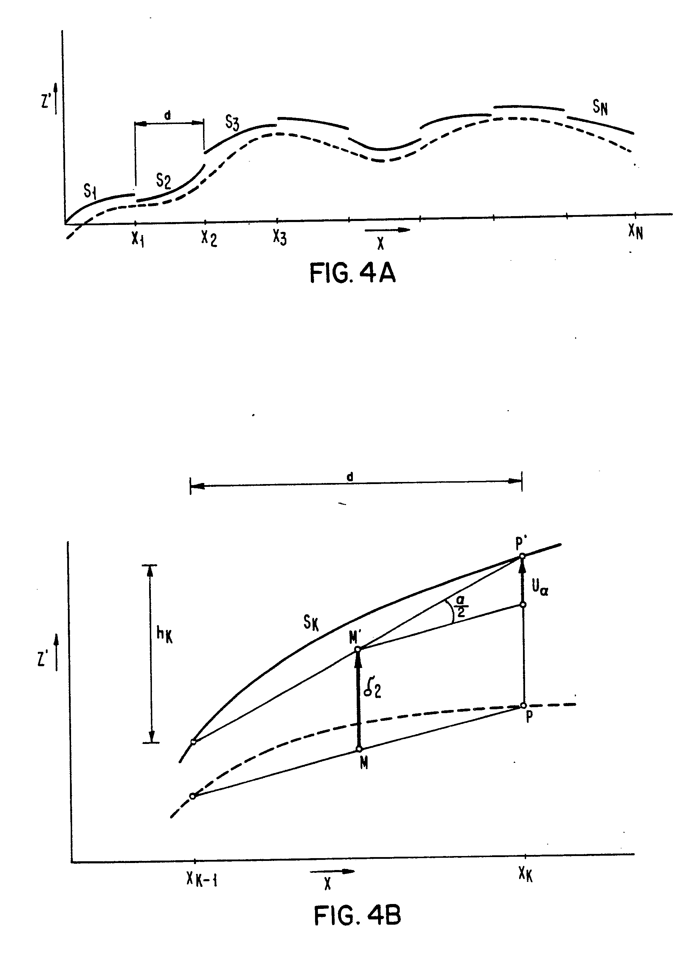

Bei der bisherigen Betrachtung wurde der Einfluß von Führungsfehlern bei der Verschiebung des Prüfkörpers bezüglich Höhen- und Winkelabweichungen nicht berücksichtigt. Dies soll im folgenden anhand der Fign. 4A und 4B geschehen, um einen der wesentlichen Vorteile des hier vorgeschlagenen Verfahrens deutlich zu machen, nämlich dessen relative Unempfindlichkeit gegenüber Führungsfehlern auch grober Natur.

Fig. 4A zeigt in schematischer Weise die Profilhöhenschwankungen des Meßobjektes nach Fig. 3A, wenn Führungsfehler auftreten. Die einzeln nacheinander angetasteten Profilelemente $S_1, S_2 \ldots S_N$

erfahren bei der Tischbewegung fehlerhafte Höhen- und Winkelschwankungen.

Fig. 4B zeigt die beiden wesentlichen Einflüsse dieser Führungsfehler am Beispiel der gemessenen Höhendifferenz $h_k$. Es handelt sich einmal um eine Höhenverschiebung $\delta z$ und um eine Drehung um den Winkel $\alpha/2$, der sog. Winkelabweichung. Die gesamte durch die Führungsfehler hervorgerufene Verschiebung des eigentlichen Punktes P in den gemessenen Punkt P' wird als Höhenschlag bezeichnet.

Die rein translatorischen Höhenverschiebungen $\Delta z$ spielen aufgrund des hier vorgeschlagenen differentiellen Messens keine Rolle und brauchen im folgenden nicht mehr berücksichtigt zu werden. Der Winkelfehler $\alpha/2$ wirkt sich dagegen auch auf die Genauigkeit bei einer Messung mit Doppelsensoren aus. Dieser Einfluß wird im folgenden näher untersucht.

Die in Fig. 3B dargestellte Profilkurve $z(x)$ kann aus den gemessenen Höhendifferenzen $h_i$, die der Meßkurve nach Fig. 3A (bzw. nach Fig. 4A) entnommen werden, in folgender Weise dargestellt werden :

$$z(x_k) = \left(1 - \frac{k}{N}\right) \sum_{i=1}^{k} h_i - \frac{k}{N} \sum_{i=k+1}^{N} h_i \tag{7}$$

wenn angenommen wird, daß die in den Meßkurven vorkommenden Steigungswinkel klein sind (so daß $\tan\beta \simeq \beta$).

Jeder Profilhöhenwert $z(x_k)$ setzt sich also additiv aus N Summanden zusammen, die jeweils mit einem Faktor $[1 - (k/N)]$ oder $[-(k/N)]$ multipliziert sind.

Der Fehler des einzelnen Meßwerts $h_i$ wird wie gewöhnlich durch die Standardabweichung $\sigma_0$ ausgedrückt. Bei einer additiven Zusammensetzung von Einzelmeßwerten, wie in Gleichung (7), ergibt sich die Standardabweichung aus der Summe der Varianzen der Einzelmessungen, also :

$$\sigma_k = \sigma_0 \sqrt{k - \frac{k^2}{N}} \tag{8}$$

Entsprechend gilt für den 3 $\sigma$-Meßfehler des Wertes $z(x_k)$ :

$$u_k = u_0 \sqrt{k - \frac{k^2}{N}} \tag{9}$$

wobei $u_0 = 3\,\sigma_0$-Fehler der Einzelmessung $h_i$.

Der Meßfehler des hier vorgeschlagenen Verfahrens ist also ortsabhängig und besitzt ein Maximum $\hat{u}_k$ in der Mitte der Abtastspur :

$$\hat{u}_k = \frac{1}{2} u_0 \sqrt{N} \tag{10}$$

Bei konstanter Intervalleinteilung d nimmt der maximale Fehler mit der Länge L des zu vermessenden Profils zu (L = N.d).

Der maximale Meßfehler $\hat{u}_k$ wird durch den Fehler $u_0$ der Einzelmessung $h_i$ bestimmt. Dieser wiederum hängt im wesentlichen von zwei Faktoren ab, dem Instrumentenfehler $\sigma_\alpha$ der Einrichtung, mit der die lokale Höhendifferenz bestimmt wird und dem Geradführungsfehler (durch die Winkelabweichung) des Probenkörpers, der durch eine Standardabweichung $\sigma_\alpha$ angegeben wird. Für den letztgenannten Fehler gilt dabei die Beziehung :

$$\sigma_\alpha = \frac{\alpha \cdot d}{12} \tag{11}$$

wobei $\alpha$ der in Fig. 4B dargestellte Kippwinkel und d wie immer der Abstand der Doppelsensoren bedeuten.

Der Gesamtfehler der Einzelmessung (in den nach den obigen Ausführungen die Höhenverschiebung $\Delta z$ nicht eingeht) kann also durch eine Standardabweichung $u_0$ beschrieben werden, die durch Addition der Varianten von Instrumentenfehler $\sigma_i$ und Winkelfehler $\sigma_\alpha$ der Einzelmessung $h_k$ entsteht :

$$u_0 = 3 \sqrt{\sigma_i^2 + \sigma_\alpha^2} \tag{12}$$

Zusammen mit Gleichung (10) und (11) ergibt sich daraus der maximale Profilhöhenmeßfehler zu :

$$\hat{u}_k = \frac{3}{2} \left[ N \left\{ \sigma_i^2 + \left( \frac{\alpha \cdot d}{12} \right)^2 \right\} \right]^{1/2} \tag{13}$$

Aus dieser Beziehung kann der optimale Sensorabstand d ermittelt werden, bei dem der Meßfehler $\hat{u}_k$ zu einem Minimum wird ; dazu muß die Bedingung

$$\frac{d\hat{u}_k}{dx} = 0 \qquad (x = d) \tag{14}$$

für Gleichung (13) erfüllt sein. Der optimale Sensorabstand $d_0$ lautet damit :

$$d_0 = \sigma_i \frac{12}{\alpha} \tag{15}$$

Die Verbesserung der Meßauflösung durch das hier vorgeschlagene Doppelsensorverfahren läßt sich am folgenden Beispiel verdeutlichen, für das angenommen wird, daß ein und dasselbe Profil einmal nach der herkömmlichen Tastschnittmethode und einmal nach dem Doppelsensorprinzip aufgenommen wird. Die Instrumentenfehler $\sigma_i$ für das Tastschnittgerät und für die Auswerteeinrichtung zur Ermittlung der lokalen Höhendifferenz (z. B. das anhand von Fig. 2 erläuterte Differential-Interferometer) seien beide gleich und betragen $\sigma_i = 1$ Nanometer. In beiden Fällen werde auch derselbe X-Y-Tisch verwendet, dessen Höhenschlag $3\,\sigma_z = 0{,}75\,\mu m$ betrage und dessen maximale Winkelabweichung durch den Wert $\alpha = 5$ arsec beschrieben sei (beide Werte sind repräsentativ für moderne präzise X-Y-Tische).

Bei der Messung mit dem herkömmlichen Tastschnittverfahren beträgt dann der Meßfehler für jeden Profilpunkt

$$u = \sqrt{(750\,nm)^2 + (1\,nm)^2} = 750\ nm.$$

Bei der Messung mit Doppelsensoren, die in einem gegenseitigen Abstand von $d = 172\,\mu m$ angeordnet sind und über eine Abtastspur der Länge $L = 107$ mm geführt werden (entsprechend einer Gesamtzahl von $N = 622$ Abtastintervallen), ergibt sich nach Gleichung (13) dagegen ein maximaler Fehler von

$$\hat{u}_k = \frac{3}{2} \sqrt{622 \cdot 0{,}232\,nm} = 18\,nm\ .$$

Bei gleichen Voraussetzungen bezüglich der Meßauflösung beider Instrumente und der Führungsgenauigkeit des verwendeten Tisches bietet das Doppelsensorverfahren also eine 40fach höhere Profil-Meßgenauigkeit.

Zur automatischen Auswertung der gemessenen Höhendifferenzen $h_i$ können diese zusammen mit den zugehörigen Tischverschiebungen $\Delta x$ einem Rechner 31 (siehe Fig. 2) zugeführt werden. Wenn eine Produktionsüberwachung durchgeführt werden soll, kann das Ausgangssignal dieses Rechners wiederum als Stellgröße für eine Einrichtung verwendet werden, die zur Bearbeitung der gemessenen Oberflächen vorgesehen ist. Durch die bei der automatischen Auswertung erreichte hohe Meßgeschwindigkeit (im Bereich von Sekunden für Profile über eine Länge von 10 cm) sind auch Mehrfachabtastungen in verschiedenen Koordinatenrichtungen möglich, um flächenhafte Profilausschnitte zu erzeugen.

Das hier vorgeschlagene Verfahren kann auch für andere als ebene Abtastspuren angewandt werden. Fig. 5 zeigt ein Beispiel für die Profilbestimmung einer parabolischen Oberfläche mit einer Doppelsensoranordnung.

**Patentansprüche**

1. Verfahren zur Messung von Oberflächenprofilen, bei dem eine Relativbewegung zwischen der Oberfläche und zwei für Höhenänderungen empfindlichen Sensoren (3, 4) erfolgt, die in einer gemeinsamen Abtastspur ausgerichtet sind, dadurch gekennzeichnet, daß längs der Abtastspur in äquidistanter Folge Höhendifferenzen $(h_i)$ für Meßpunkte mit einem gegenseitigen Abstand

$$d_0 = \sigma_i \frac{12}{\alpha}$$

gemessen werden, wobei $\alpha$ der Maximalwert der Winkelabweichung bei der Geradführung der untersuchten Oberfläche ist und $\sigma_i$ die Standardabweichung des für die Bestimmung der lokalen Höhendifferenzen verwendeten Sensorenpaars, und daß zur Berechnung des Oberflächenprofils Z(X) die gemessenen Höhendifferenzen in folgender Weise addiert werden :

$$z(x_k) = \left(1 - \frac{k}{N}\right) \sum_{i=1}^{k} h_i - \frac{k}{N} \sum_{i=k+1}^{N} h_i$$

wobei N = die Gesamtzahl der gemessenen äquidistanten Höhendifferenzen längs der gesamten Abtastspur ist und k den k-ten Meßpunkt bezeichnet.

2. Einrichtung zur Durchführung des Verfahrens nach Anspruch 1, dadurch gekennzeichnet, daß als Höhensensoren (3, 4) zwei mechanische Tastspitzen mit dem gegenseitigen Abstand $d_0$ verwendet werden.

3. Einrichtung zur Durchführung des Verfahrens nach Anspruch 1, dadurch gekennzeichnet, daß als Höhensensoren (3, 4) die beiden Strahlenbündel eines Differential-Interferometers verwendet werden, die mit dem gegenseitigen Abstand $d_0$ an der zu messenden Oberfläche reflektiert werden.

4. Einrichtung nach Anspruch 3, dadurch gekennzeichnet, daß die zur Antastung der zu messenden Oberfläche verwendeten Strahlenbündel unterschiedliche Polarisationsrichtung aufweisen und in einer phasenkompensierten interferometrischen Anordnung ausgewertet werden.

5. Einrichtung zur Durchführung des Verfahrens nach Anspruch 1, dadurch gekennzeichnet, daß als Höhensensoren (3, 4) zwei induktive Abstandsmesser mit dem gegenseitigen Abstand $d_0$ verwendet werden.

6. Einrichtung zur Durchführung des Verfahrens nach Anspruch 1, dadurch gekennzeichnet, daß als Höhensensoren (3, 4) zwei kapazitive Abstandsmesser mit dem gegenseitigen Abstand $d_0$ verwendet werden.

## Claims

1. Method of measuring surface profiles, wherein there is a relative movement between the surface and two sensors (3, 4) responding to height variations and which are aligned along a common scanning track, characterized in that height differences ($h_i$) for measuring points with a mutual spacing of

$$d_0 = \sigma_i \frac{12}{\alpha}$$

are measured in an equidistant sequence along the scanning track, where $\alpha$ is the maximum value of the angular deviation when the surface being tested is rectilinearly guided and $\sigma_i$ is the standard deviation of the sensor pair used to determine local height differences, and that for computing the surface profile Z(X), the measured height differences are added as follows

$$z(x_k) = \left(1 - \frac{k}{N}\right) \sum_{i=1}^{k} h_i - \frac{k}{N} \sum_{i=k+1}^{N} h_i$$

where N is the total number of equidistant height differences measured along the entire scanning track and k denotes the kth measuring point.

2. Arrangement for implementing the method according to claim 1, characterized in that two mechanical scanning tips with the mutual spacing $d_0$ are used as height sensors (3, 4).

3. Arrangement for implementing the method according to claim 1, characterized in that the two beams of a differential interferometer, which are reflected at the mutual spacing $d_0$ at the surface to be measured, are used as height sensors (3, 4).

4. Arrangement according to claim 3, characterized in that the beams used to sense the surface to be tested have different polarizing directions and are evaluated in a phase-compensating interferometric setup.

5. Arrangement for implementing the method according to claim 1, characterized in that two inductive distance measuring means with the mutual spacing $d_0$ are used as height sensors (3, 4).

6. Arrangement for implementing the method according to claim 1, characterized in that two capacitive distance measuring means with the mutual spacing $d_0$ are used as height sensors (3, 4).

## Revendications

1. Procédé permettant de relever des profils de surface, selon lequel on produit un déplacement relatif entre la surface et deux capteurs (3, 4) sensibles aux variations de hauteur et qui sont dirigés suivant une piste commune de palpage, caractérisé en ce qu'on mesure, le long de cette piste de palpage et suivant une progression équidistante, des différences de hauteur ($h_i$) associées à des points de mesure présentant un espacement mutuel :

$$d_0' = \sigma_i \frac{12}{\alpha}$$

où $\alpha$ est la valeur maximale de l'écart angulaire se présentant lors du guidage de la surface contrôlée et $\sigma_i$ est l'écart quadratique moyen du couple de capteurs utilisés pour la détermination des différences localisées de hauteur, et en ce que, pour calculer le profil de surface $Z(X)$, on effectue de la façon suivante la sommation des différences de hauteur mesurées :

$$z(x_k) = \left( 1 - \frac{k}{N} \right) \sum_{i=1}^{k} h_i - \frac{k}{N} \sum_{i=k+1}^{N} h_i$$

où $N$ = le nombre total des différences de hauteur équidistantes mesurées le long de l'ensemble de la piste de palpage et $k$ désigne le kième point de mesure.

2. Dispositif de mise en œuvre du procédé selon la revendication 1, caractérisé en ce qu'on utilise comme capteurs de hauteur (3, 4) deux pointes mécaniques de contact à l'espacement mutuel $d_0$.

3. Dispositif de mise en œuvre du procédé selon la revendication 1, caractérisé en ce qu'on utilise comme capteur de hauteur (3, 4) les deux faisceaux lumineux d'un interféromètre différentiel qui sont réfléchis sur la surface à mesurer avec l'espacement mutuel $d_0$.

4. Dispositif selon la revendication 3, caractérisé en ce que les faisceaux lumineux utilisés pour le palpage de la surface à mesurer présentent des directions différentes de polarisation et sont analysés dans un agencement interférométrique à compensation de phase.

5. Dispositif de mise en œuvre du procédé selon la revendication 1, caractérisé en ce qu'on utilise comme capteurs de hauteur (3, 4) deux organes inductifs de mesure de distance à l'espacement mutuel $d_0$.

6. Dispositif de mise en œuvre du procédé selon la revendication 1, caractérisé en ce qu'on utilise comme capteurs de hauteur (3, 4) deux organes capacitifs de mesure de distance à l'espacement mutuel $d_0$.

FIG. 1

FIG. 2

FIG. 3A

FIG. 3B

$Z \sim X^2$

FIG. 5

2

FIG. 4A

FIG. 4B